# EUROPEAN PATENT SPECIFICATION

(11) **EP 3 612 376 B1**
(45) Date of publication and mention of the grant of the patent: **06.10.2021**
(21) Application number: 18721091.9
(22) Date of filing: 18.04.2018
(51) Int. Cl.: B29C 67/24, H01B 1/20, B29K 505/06

(54) **METHOD OF PRODUCING AGGLOMERATES FOR INCLUSION IN A COMPOSITE MATERIAL**
AGGLOMERATENHERSTELLUNGSVERFAHREN FÜR DIE EINBINDUNG IN VERBUNDSTOFFMATERIAL
PROCÉDÉ DE PRODUCTION D'AGGLOMÉRATS POUR INCLUSION DANS UN MATÉRIAU COMPOSITE

(30) Priority: 21.04.2017 GB 201706363
(43) Date of publication of application: 26.02.2020
(73) Proprietor: Peratech Holdco Ltd, Richmond DL10 7JH (GB)
(72) Inventor: DEMPSEY, Sarah Jessica, Durham DH1 2JY (GB)
(74) Representative: Atkinson & Company Intellectual Property Limited
(86) International application number: PCT/GB2018/000069
(87) International publication number: WO 2018/193222

(56) References cited:
- EP-A2- 0 231 068
- EP-A2- 2 689 431
- Sarah Jessica Dempsey ET AL: "Structure and Functionality of Novel Nanocomposite Granules for a Pressure-Sensitive Ink with Applications in Touchscreen Technologies", , 27 April 2016 (2016-04-27), pages 1-316, XP055485622, Retrieved from the Internet: URL:http://etheses.dur.ac.uk/11509/ [retrieved on 2018-06-19]
- Sarah Jessica Dempsey: "Structure and functionality of novel nanocomposite granules for a pressure-sensitive ink with applications in touchscreen technologies", , 27 April 2016 (2016-04-27), pages 1-1, XP055485664, http://etheses.dur.ac.uk/11509/ Retrieved from the Internet: URL:https://epo.summon.serialssolutions.co m/2.0.0/link/0/eLvHCXMwtZ1NS8MwGMeDsot4URR 8mRBQT6Wwpmldb7I5Nz0NmYd5GV2bepntsNs-gp_b_ 5OlXbvBwIOXh5BCKP1Bnpf8n4axu8h3_ViowPYCEdt yqoQdqjCxlZLwf_CfXkgNzuOuHPUf3vp0W8OjIb2Z- 1fSmANr6pz9A-1yUUxgDOawoA67FRDvHKWb3g79R9j iXID81rrcZ7QXabZSMysN04zU5CTZUtYnHNZypvK1p NLS2lgsYOe [retrieved on 2018-06-19]

## Description

### BACKGROUND OF THE INVENTION

The present invention relates to a method of producing a plurality of agglomerates for inclusion in an electrically responsive composite material.

User input devices are known that are substantially flat and are responsive to movement of a stylus or finger in an xy plane, and in some cases, also sensitive to pressure applied in the z dimension. When incorporated into touch screens, it has previously proved difficult to produce transparent touch screens which operate in both the xy plane and the z dimension, this problem being previously identified in the applicant's patent EP 2 689 431.

EP 2 689 431 provides a pressure sensitive composite material which comprises a plurality of agglomerates dispersed within a carrier layer. In manufacture, these agglomerates are spontaneously formed by a process of mixing conductive or semi-conductive particles in combination with a polymeric material to produce the composite material in question. During mixing, the conductive or semi-conductive particles combine with other conductive or semi-conductive particles to form the agglomerates within the carrier layer. Thus, the formed agglomerates are dependent on the mixing process of the composite material and require a limitation of hyper-dispersant levels so that the agglomerates can form. The resulting agglomerates are often irregular with varying mechanical and electrical properties and the composite material often includes small agglomerates which provide limited conduction through the carrier layer and optical haze through an otherwise transparent or translucent material.

### BRIEF SUMMARY OF THE INVENTION

The invention is directed to a method of producing a plurality of agglomerates for inclusion in an electrically responsive composite material, comprising the steps of: obtaining a plurality of electrically conductive or semi-conductive particles; mixing said plurality of electrically conductive or semi-conductive particles in a centrifugal mixer, said mixing step comprising operating said centrifugal mixer at a Froude number of between 220 and 1100; and adhering said plurality of electrically conductive or semi-conductive particles by adding a granulation binder and mixing said granulation binder with said plurality of electrically conductive or semi-conductive particles to form a plurality of agglomerates; wherein each said step of obtaining, mixing and adhering said electrically conductive or semi-conductive particles pre-forms said plurality of agglomerates prior to introduction of said plurality of agglomerates into said electrically responsive composite material.

Embodiments of the invention will be described, by way of example only, with reference to the accompanying drawings. The detailed embodiments show the best mode known to the inventor and provide support for the invention as claimed. However, they are only exemplary and should not be used to interpret or limit the scope of the claims. Their purpose is to provide a teaching to those skilled in the art.

Components and processes distinguished by ordinal phrases such as "first" and "second" do not necessarily define an order or ranking of any sort.

### BRIEF DESCRIPTION OF THE SEVERAL VIEWS OF THE DRAWINGS

Figure 1 shows an electrically responsive composite material;
Figure 2 shows a schematic method of producing a plurality of agglomerates;
Figure 3 shows a schematic representation of a granulation vessel in the form of a dual axis centrifugal mixer;
Figure 4 shows a graph of Froude number against the rotational speed for a granulation vessel in accordance with the present invention;
Figure 5 shows a graph of rotational speed against the granulation time for a granulation vessel in accordance with the present invention;
Figure 6 shows agglomerates have a plurality of indentations on their surface;
Figure 7 shows a method of producing a plurality of agglomerates;
Figure 8 shows a composite material having a plurality of pre-formed agglomerates;
Figures 9A and 9B show a diagrammatic illustration of conduction paths through a composite material; and
Figure 10 shows a force resistance response curve for composite materials.

### DETAILED DESCRIPTION OF THE INVENTION

### Figure 1

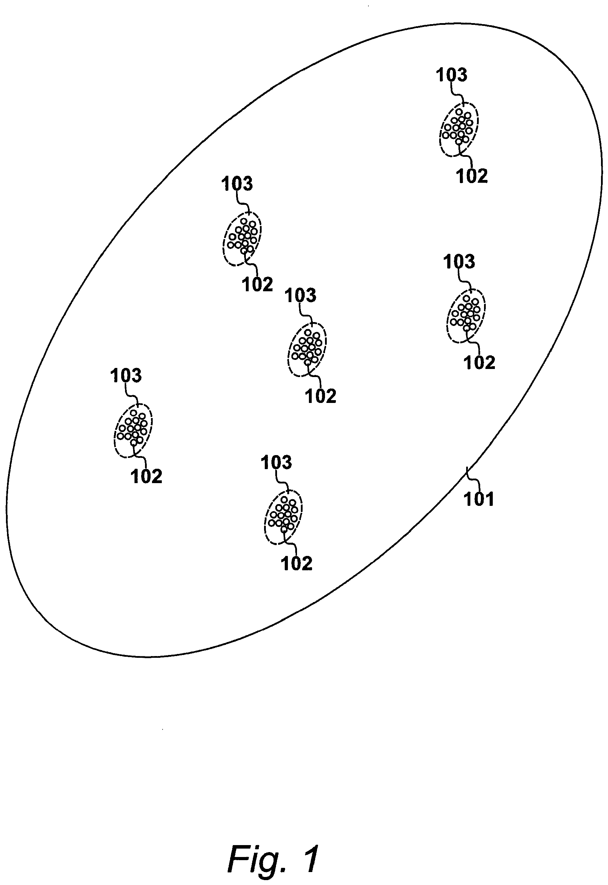

An electrically responsive composite material **101** is illustrated in Figure 1. Electrically responsive composite material **101** is suitable for applying to a suitable substrate and can thus be incorporated into an electronic device such as a touch screen. Composite material **101** comprises a plurality of agglomerates **102** which are dispersed within a carrier layer **103**. Carrier layer **103** comprises a polymer binder which can be crosslinkable, solvent-based, thermally or uv-curable. The polymer binder may also be opaque, translucent or substantially transparent and remains such after cross-linking, solvent evaporation or curing.

Each of the agglomerates **102** comprise a plurality of electrically conductive or semi-conductive particles **103** which are adhered together to form the agglomerates **102**. In manufacture, the agglomerates are pre-formed and then dispersed within the carrier layer in the manner of Figure 1. Pre-formed is used throughout this specification to indicate that the agglomerates are produced by combining a plurality of electrically conductive or semi-conductive particles separately and before combining the agglomerates with the carrier layer. Additionally, agglomerate is used throughout the specification to refer to a granular particle which has been formed from a plurality of electrically conductive or semi-conductive particles though a granulation method and which is able to provide conduction through the agglomerate itself. Thus, each individual agglomerate can then be combined with appropriate carrier binders to produce conductive composite materials.

The size and dispersion of the agglomerates (shown greatly enlarged in Figure 1) is such as to render them invisible to an unaided eye. Thus, the size of the agglomerates is such that a thin coating of the electrically responsive composite material appears optically substantially the same as without the addition of the filler particles. Furthermore, as the agglomerates are dispersed within the carrier layer, the composite material as a whole may take the optical appearance of the polymer binder.

### Figure 2

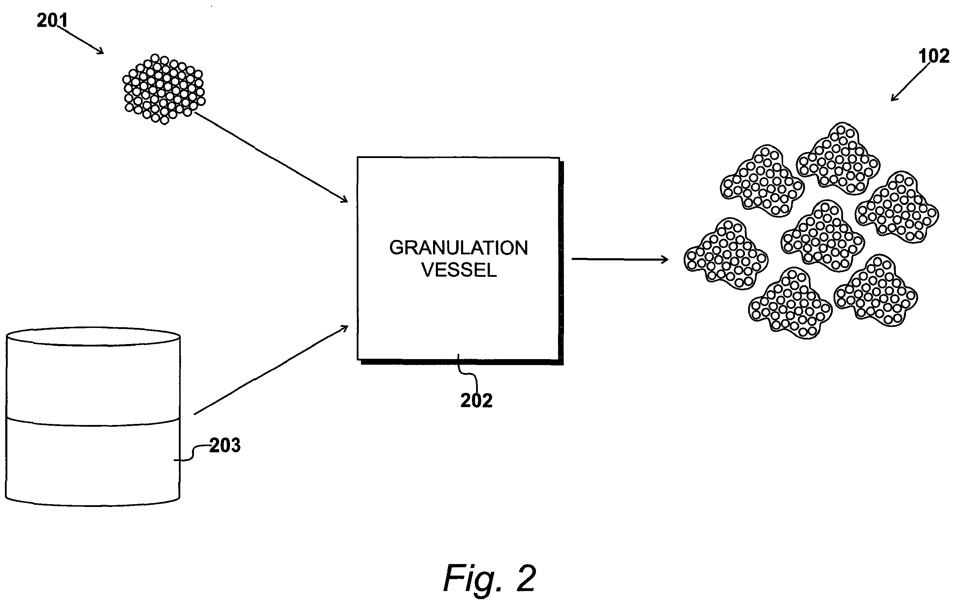

Figure 2 shows a schematic of a method of producing a plurality of agglomerates **102** which are suitable for inclusion in an electrically responsive composite material, such as electrically composite material **101** as previously described in Figure 1. It is noted that the schematic is diagrammatical in nature and therefore not to scale.

In order to produce the plurality of agglomerates **102**, a plurality of electrically conductive or semi-conductive particles **201** are obtained and are placed into a granulation vessel **202**. A granulation binder **203** is also added into the granulation vessel **202**. The granulation vessel **202** is configured to perform a mixing process so that the plurality of electrically conductive or semi-conductive particles **201** adhere to each other during the mixing process. In the embodiment, particles **201** adhere together due to the presence of binder **203**. In this way, the plurality of agglomerates **102** comprise a plurality of electrically conductive or semi-conductive particles **201** which have been adhered together by the mixing process performed by the granulation vessel **202**.

In the embodiment, the ratio of the plurality of electrically conductive or semi-conductive particles **201** to granulation binder **203** is 10:1 weight/weight. Thus, it is appreciated that the amount of granulation binder used to adhere the particles together is relatively small compared to the amount of particles which form each agglomerate. It is further appreciated that, in alternative embodiments, alternative ratios which allow the electrically conductive and/or semi-conductive particles to adhere to each other are used.

In an embodiment, the conductive particles comprise antimony doped tin oxide particles. These are illustrated as spherical particles; however, it is appreciated that, in alternative embodiments, the particles are acicular (or needle shaped). The electrically conductive or semi-conductive particles typically have a largest dimension of between ten (10) and one hundred (100) nanometres (nm).

In an embodiment, granulation binder **203** comprises a silicone liquid binder, and in particular, comprises a two-part translucent high consistency rubber of which the main constituent is polydimethylsiloxane (PDMS). In an alternative embodiment, the granulation binder comprises a carbon-based (organic) binder such as an alcohol/petrol resistant (APR) varnish. In a further alternative embodiment, the granulation binder comprises a water-based binder, for example a transparent screen-printable ink containing no organic solvent. In still further embodiments, other suitable granulation binders may be used.

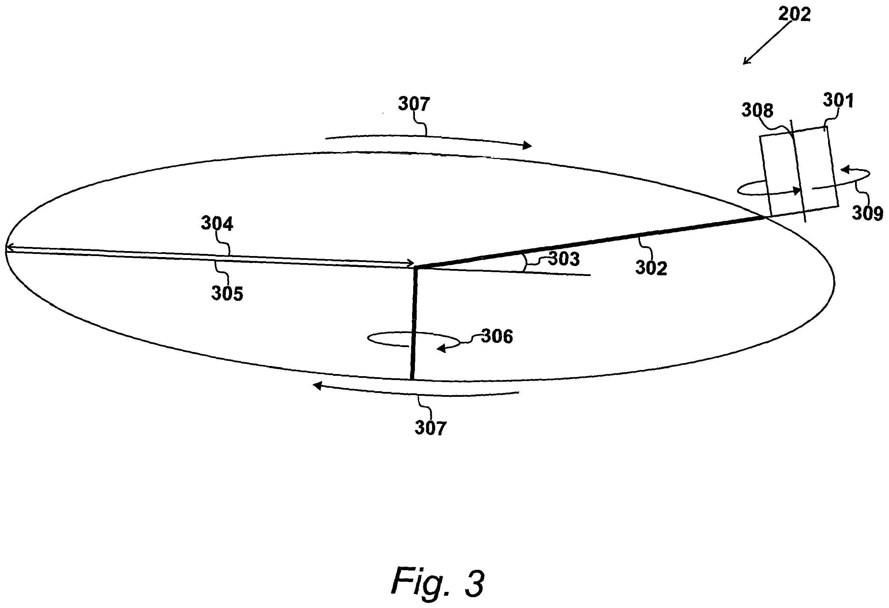

Granulation vessel **202** is configured to mix the particles and granulation binder at relatively high energies so as to produce agglomerates which do not break up easily. In an embodiment, the granulation vessel is a centrifugal mixer. In a particular embodiment, the centrifugal mixer has a dual axis of rotation, such as a SpeedMixer™ DAC 150.1 FVZ dual asymmetric centrifugal laboratory mixer as will be described in further detail with respect to Figure 3.

### Figure 3

A schematic representation of a granulation vessel in the form of a dual axis centrifugal mixer which is suitable for performing a granulation process in accordance with the present invention is shown with respect to Figure 3. It is appreciated that the granulation vessel of Figure 2 can be any other suitable vessel which is able to produce suitable agglomerates of the type described herein, with Figure 3 providing a suitable example which is able to achieve the agglomerates herein described.

A sample container **301** is provided into which the plurality of electrically conductive or semi-conductive particles **201** can be added along with the corresponding granulation binder **203**. Sample container **301** is positioned at one end of a rotational arm **302** which is inclined at an angle **303** to the horizontal **304** about the cylindrical vessel having a radius **305**. In an embodiment, angle **303** is set at forty degrees (40°) to the horizontal **304**, with the radius being eighty millimetres (80mm).

In use, rotational arm **302** is rotated about a central rotation axis **306**, so that the sample container **301**, due to its position at the end of rotational arm **302**, moves in a circular manner in the direction of arrows **307**. The dual axis centrifugal mixer **202** is further configured to rotate sample container **301** about a secondary rotation axis **308**, in an opposed direction to that of the central rotation **306**. This is indicated by the arrow **309**.

The use of a dual asymmetric centrifuge of this type is advantageous as it promotes rapid homogenisation of the sample in the container and reduces air bubbles in the sample. This is due to the high acceleration and opposing centripetal forces imposed by the opposing axes. Traditionally, this type of mixer is not used for granulation processes, but for mixing two separate liquids together. The applicant has found, however, that a dual axis mixer of this type produces suitable agglomerates for use in an electrically responsive composite material.

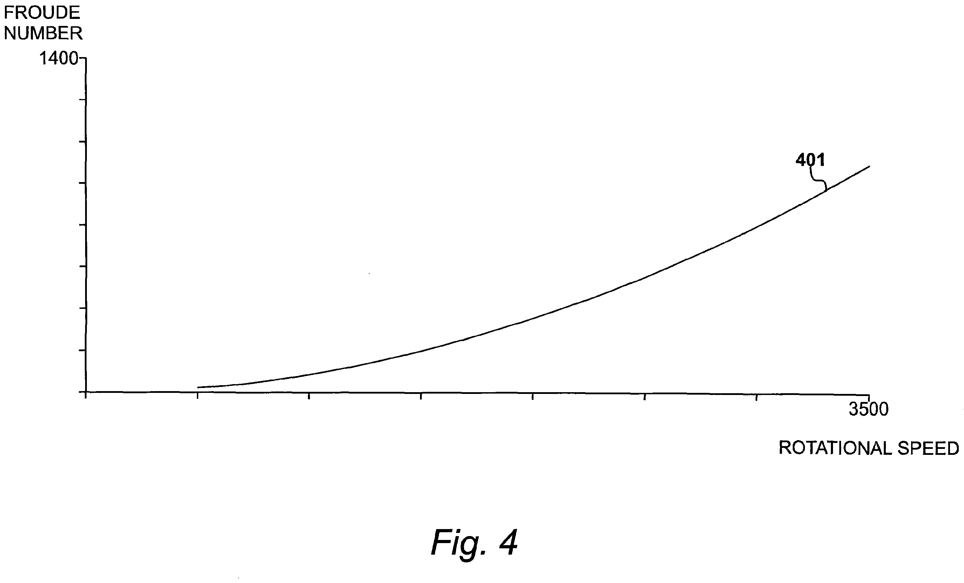

The nature of this particular granulation vessel is that parameters such as the radius of rotation and speed of rotation can be varied to provide suitable results. In the embodiment, while the radius of rotation is maintained as a function of a particular mixer, the speed of rotation is relatively high which produces a high Froude number as will described in detail with respect to Figure 4.

### Figure 4

The dual axis centrifugal mixer as described in respect of Figure 3 is configured to operate at a high energy having a Froude number of between 220 and 1100. The Froude number of a granulator is a measure of the centripetal acceleration acting on the sample in the sample container as a ratio of the gravitational acceleration. It is therefore defined by the square of the angular velocity multiplied by the characteristic radius of the granulation vessel and divided by the gravitational acceleration. Control of the Froude number of the granulation vessel in use can be used to compare the energy of granulation imparted onto the particles.

Figure 4 illustrates a graph of Froude number against the rotational speed about the central axis **306** in revolutions per minute (rpm). Line **401** shows the variation in Froude number with increased rotational speed. In the embodiment, the centrifugal mixer of Figure 3 operates at a rotational speed of between 1000 and 3500 rpm which produces a corresponding Froude number of between 220 and 1100. In particular, at a speed of 3500 a Froude number of 1096 has been measured. In a further embodiment, a Froude number of between 229 and 1095 corresponds to a rotational speed of between 1600 and 3500 rpm.

In conventional granulation vessels, it is typical for Froude numbers to range between 0.2 to around 100, and therefore the present invention imparts much higher energies into the sample (i.e. the granulation binder and electrically conductive or semi-conductive particles) than would normally be expected in a granulation process.

While a dual axis centrifugal mixer is described here, it is appreciated that alternative granulation vessels may be used provided that they are able to input a suitably high Froude number to provide suitable agglomerates by means of a substantially similar granulation process.

### Figure 5

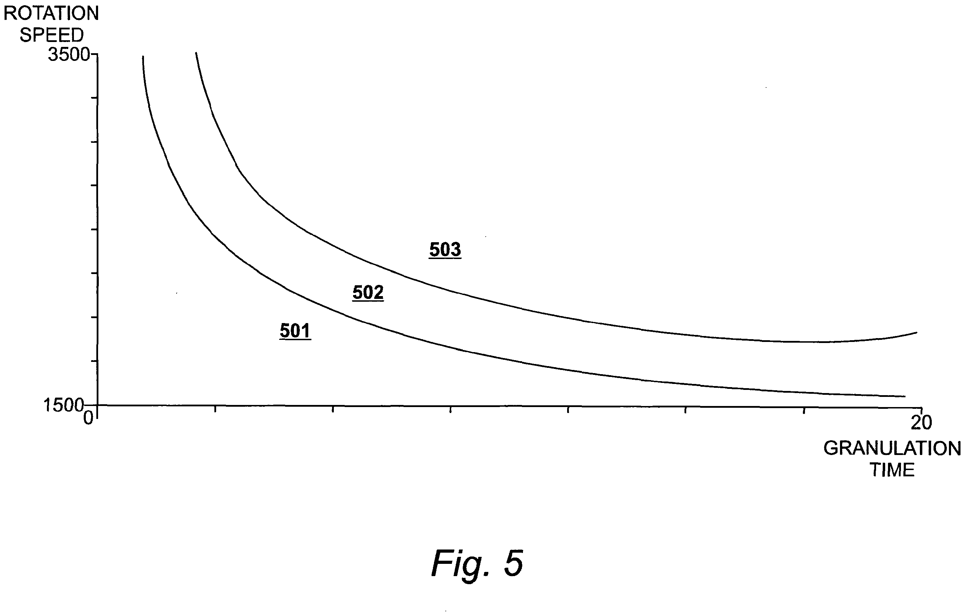

To further illustrate the parameters used in the method of production of pre-formed agglomerates suitable for use in an electrically responsive conductive material, a graph of rotational speed (revolutions per minute - rpm) against the granulation time (minutes) is shown in Figure 5. The graph described in respect of Figure 5 is illustrative of the process by which the agglomerates are formed through granulation. The granulation process involves a nucleation phase which results in relatively small agglomerates. This phase is then followed by a rapid growth phase in which an increased number of conductive particles join or stick to the forming agglomerate. Thus, the graph of Figure 5 illustrates how the timing of these phases can be controlled to result in agglomerates of different properties.

The graph illustrates three regions, **501**, **502** and **503** indicating the relationship between the two parameters and the corresponding size of agglomerates produced. In region **501**, agglomerates were produced of sizes having a greatest dimension of less than ten micrometres (10 µm). Thus, in this region, the agglomerates produced are relatively small. In region **502**, the agglomerates larger, surface-smooth agglomerates are produced which typically have a largest dimension of between twenty and forty micrometres (20-40 µm). In region **503**, the agglomerates are larger and may be more than forty micrometres (40 µm) across their largest dimension. Agglomerates in region **503** have been noted to include a plurality of indentations on their surface which provides an appearance similar to a golf-ball.

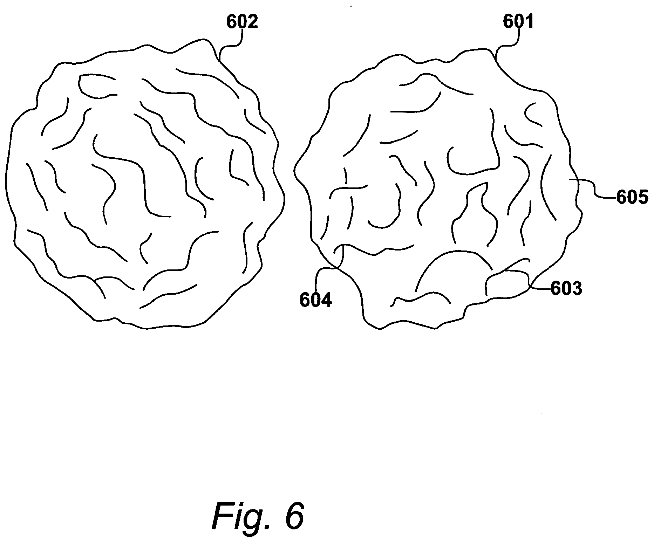

Thus, in an embodiment, the agglomerates have a largest dimension of between four and twenty micrometres (4-20 µm) and preferably between four and ten micrometres (4-10 µm) and typically have a smooth surface and relatively consistent overall size. However, in an alternative embodiment, the agglomerates produced are larger and have indentations on their surface, as will be described in further detail in Figure 6.

### Figure 6

Example agglomerates in accordance with the present invention are shown in Figure 6. Agglomerates **601** and **602** have been produced by the method described previously in respect of Figure 2.

In this embodiment, the agglomerates have been produced in line with the parameters of region 3 of the graph of Figure 5. Thus, agglomerates **601** and **602** include a plurality of indentations, such as indentations **603** and **604** on surface **605** of agglomerate **601**. Thus, these agglomerates have a relatively large surface area compared to agglomerates having a smooth surface. In this embodiment, the largest dimension of the agglomerates (in this case the diameter) is typically between twenty and forty micrometres (20-40 µm); however, agglomerates of over forty micrometres (40 µm) can be produced in this manner.

### Figure 7

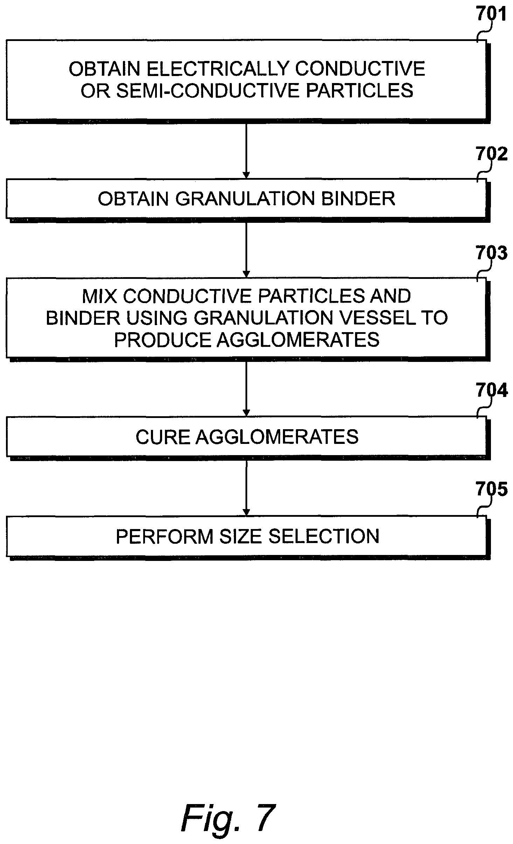

A method of producing a plurality of agglomerates of the types previously described herein is shown in diagrammatic form in Figure 7.

At step **701**, electrically conductive or semi-conductive particles **201** are obtained. In an embodiment, the particles **201** comprise antimony doped tin oxide spherical particles. In an alternative embodiment, the antimony doped tin oxide particles are acicular or needle-shaped. Each particle typically has a largest dimension of between ten and one hundred nanometres (10-100 nm).

At step **702** a granulation binder **203** is obtained. The granulation binder is in the form of a liquid and is typically a silicone liquid binder such as one which comprises a two-part translucent high consistency rubber of which the main constituent is polydimethylsiloxane (PDMS). In an alternative embodiment, granulation binder **203** comprises a carbon-based (organic) binder such as an alcohol/petrol resistant (APR) varnish. In a further alternative embodiment, the granulation binder comprises a water-based binder, for example a transparent screen-printable ink containing no organic solvent.

The particles and granulation binder are introduced into a granulation vessel in the manner of Figure 2 and undergo a mixing process which adheres the particles together to produce agglomerates at step **703**. The process of mixing and adhering the particles can be varied as described above in order to obtain agglomerates having particular properties, such as varied sizes, shapes, or porosity, which is affected by the granulation time.

The agglomerates are then removed from the granulation vessel and undergo a curing process at step **704**. In an embodiment, this involves placing the agglomerates into a suitable oven and applying a heating process to the agglomerates.

At step **705**, the agglomerates undergo a further size selection process which ensures that each said agglomerate is within a predetermined size range. For example, in an embodiment, the agglomerates are sieved at twenty micrometres (20 µm) so maintain the agglomerates as being smaller than twenty micrometres (20 µm). This assists in ensuring that the agglomerates are of a suitable size for any future applications, such as the inclusion into an electrically responsive composite material. It is appreciated that other size selection processes may be utilised that allow the agglomerates to be sorted in accordance with their future applications.

Once the plurality of agglomerates have been suitably formed as described, they are then able to be used in the production of a composite material, which in turn can form part of a touch screen or other electronic device.

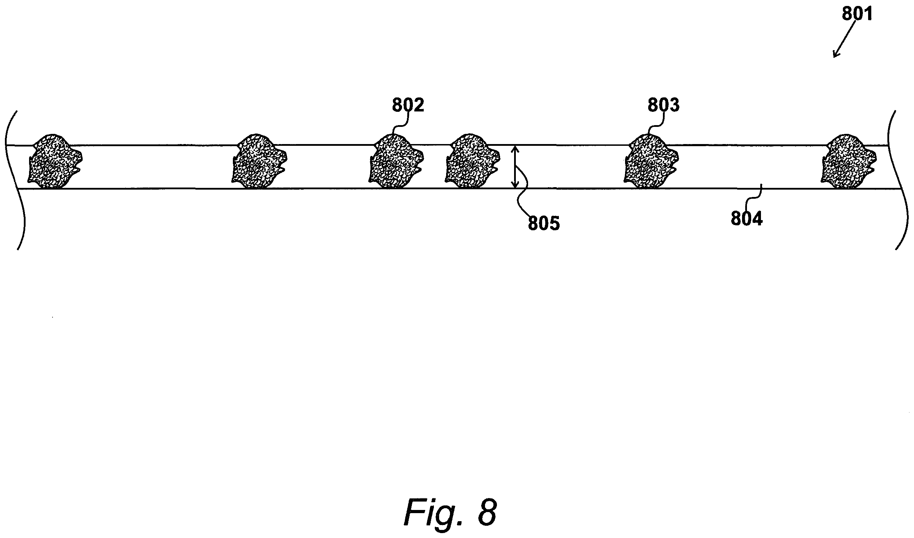

In order to produce a composite material, the plurality of agglomerates are introduced into a liquid carrier and mixed into the liquid carrier to produce the composite material which will now be described with respect to Figure 8.

### Figure 8

A composite material **801** having a plurality of agglomerates, such as agglomerates **802** and **803**, which have been pre-formed by the method herein described, is shown in Figure 8.

The plurality of agglomerates (**802**, **803**) have been introduced into a liquid carrier which has been solidified to produce a solidified polymeric material. In an embodiment, the carrier layer comprises any suitable liquid carrier which comprises a component capable of solidifying to produce a solidified polymeric material and in order to produce the composite material, the agglomerates are introduced into the liquid carrier and mixed to disperse the agglomerates within the liquid carrier before solidification takes place.

The resultant carrier layer **804** has a length and a width and a thickness **805** which is relatively small compared to the width. In the embodiment, the thickness **805** is between four and six micrometres (4-6 µm).

The plurality of agglomerates (**802**, **803**) have a largest dimension of between four and twenty micrometres (4-20 µm), but in the embodiment, the largest dimension is typically between four and ten micrometres (4-10 µm). In particular, the thickness **805** of carrier layer **804** is smaller than the largest dimension of each agglomerate. For example, the agglomerates have a largest dimension of between eight and ten micrometres (8-10 µm) for a carrier layer thickness of six micrometres (6 µm). Thus, in this way, the agglomerates protrude slightly from the solidified carrier layer so that they are able to provide a conductive path.

In contrast to previous method of manufacture, because the agglomerates have been pre-formed prior to their inclusion into the liquid binder, the agglomerates are able to be provided with consistent properties, both mechanical and electrical. Thus, this reduces the number of particles which do not form usable agglomerates, for example, those which are too small to provide a conductive path through the carrier layer.

### Figure 9

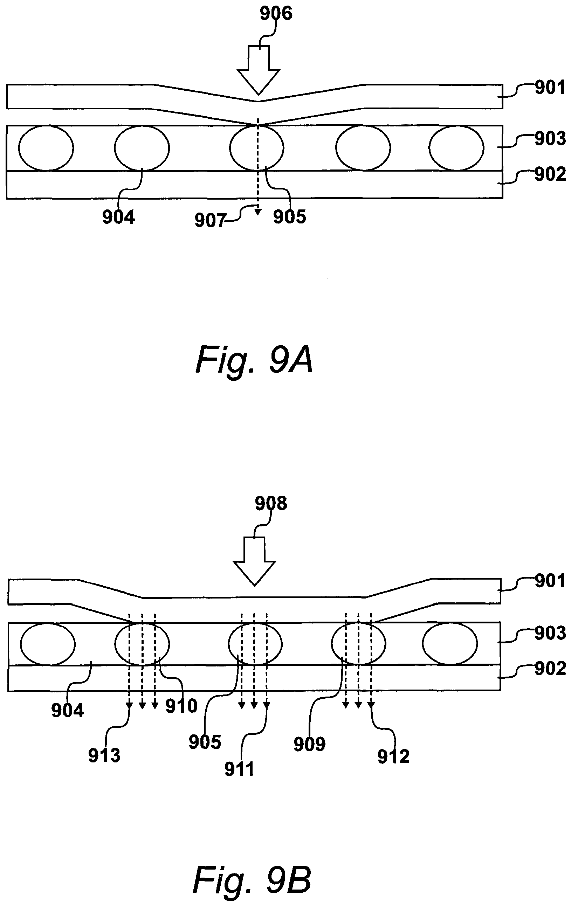

A diagrammatic illustration of conduction paths through a composite material in accordance with the invention is shown in Figure 9. In this example embodiment, the composite material has been incorporated into a touch screen having a deformable electrode of indium tin oxide (ITO) **901** and a rigid electrode of indium tin oxide (ITO) **902**. A composite material **903** is sandwiched between the two electrodes **901** and **902**, which comprises a solidified polymeric insulating carrier layer **904** and a plurality of agglomerates, such as agglomerate **905**.

When a low force is applied to deformable electrode **901**, indicated by arrow **906**, agglomerate **905** is brought into contact with electrode **901** which creates a limited conduction path indicated by arrow **907**, as shown in Figure 9A. In contrast, with respect to Figure 9B, when a larger force, indicated by arrow **908**, is applied to electrode **901**, contact is made, not only with agglomerate **905**, but also agglomerates **909** and **910**. Conduction paths are illustrated by arrows **911**, **912** and **913**. Thus, with increased force, contact is made with an increased number of agglomerates, thus increasing the conduction path. Furthermore, the agglomerates themselves may exhibit a pressure sensitive electrical resistance, such that with a higher applied force, there is also a further increase in conduction for this reason.

### Figure 10

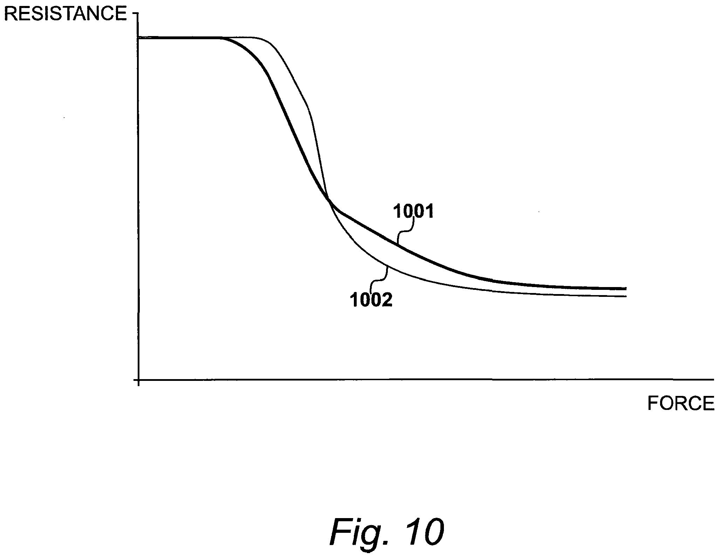

A graph of force against resistance for samples corresponding to composite materials of the type previously manufactured in accordance with the applicant's patent EP 2 689 431, and composite materials in accordance with the present invention is shown in Figure 10.

Line **1001** shows the force-resistance response of a sample in accordance with the present invention, where the agglomerates have been pre-formed. Line **1002** shows the force-resistance response of a sample in accordance with the previously known method which creates agglomerates spontaneously. In the sample used here, the agglomerates were pre-formed using a centrifugal mixer as described with respect to Figure 3, at a rotational speed of 2000 rpm for four minutes.

It is noted that the present invention produces a less sensitive force-resistance response at low forces, meaning the composite material operates less like a switch than conventional methods. This can be useful in digital on/off applications. Visible light transmission is also improved as there is reduced haze from lack of non-conducting smaller agglomerates.

Thus, the present invention not only provides a suitable method for controlling the parameters of the agglomerates to suit a particular application, but also provides characteristics that are not provided by spontaneous agglomerate formation.

## Claims

1. A method of producing a plurality of agglomerates (102) for inclusion in an electrically responsive composite material (101), comprising the steps of:
obtaining a plurality of electrically conductive or semi-conductive particles (103);
mixing said plurality of electrically conductive or semi-conductive particles in a centrifugal mixer (202), said mixing step comprising operating said centrifugal mixer at a Froude number of between 220 and 1100; and
adhering said plurality of electrically conductive or semi-conductive particles by adding a granulation binder (203) and mixing said granulation binder with said plurality of electrically conductive or semi-conductive particles to form a plurality of agglomerates; **characterised in that**:
each said step of obtaining, mixing and adhering said electrically conductive or semi-conductive particles pre-forms said plurality of agglomerates prior to introduction of said plurality of agglomerates into said electrically responsive composite material.

2. The method of producing a plurality of agglomerates according to claim 1, further comprising the step of: performing a size selection process to ensure each said agglomerate is within a predetermined size range.

3. The method of producing a plurality of agglomerates according to claim 2, wherein said size selection process comprises sieving.

4. The method of producing a plurality of agglomerates according to any one of claims 1 to 3, further comprising the step of curing each said agglomerate by a heating process.

5. A method of producing a composite material, comprising the steps of:
obtaining a plurality of agglomerates (102);
introducing said plurality of agglomerates into a liquid carrier comprising a component capable of solidifying to produce a solidified polymeric material; and
mixing said plurality of agglomerates into said liquid carrier to produce a composite material; wherein each said agglomerate is pre-formed by the method of claim 1.

6. The method of producing a composite material according to claim 5, wherein said centrifugal mixer has a dual axis of rotation.

7. The method of producing a composite material according to claim 6, wherein said centrifugal mixer is rotated at a speed of between 1000 and 3500 rpm.

8. The method of producing a composite material according to any of claims 5 to 7, wherein said granulation binder is added at a ratio of said plurality of electrically conductive or semi-conductive particles to binder of 10:1 weight/weight.

9. The method of producing a composite material according to any one of claims 5 to 8, wherein said granulation binder comprises a silicone liquid binder.

10. The method of producing a composite material according to claim 5, wherein each said agglomerate (601, 602) comprises a surface (605) having a plurality of indentations (603, 604) and has a largest dimension of more than 40 micrometres.

11. The method of producing a composite material according to claim 5, wherein each said agglomerate has a largest dimension of between 4 and 20 micrometres.

12. The method of producing a composite material according to claim 11, wherein each said agglomerate has a largest dimension of between 4 and 10 micrometres.

13. The method of producing a composite material according to any one of claims 5 to 12, wherein said plurality of electrically conductive or semi-conductive particles comprise antimony doped tin oxide spherical particles.

14. The method of producing a composite material according to any one of claims 5 to 13, wherein each said electrically conductive or semi-conductive particle has a largest dimension of between 10 and 100 nanometres.

## Patentansprüche

1. Eine Methode zur Herstellung einer Vielzahl von Agglomeraten (102) zur Einbindung in einen elektrisch reaktiven Kompositwerkstoff (101), bestehend aus folgenden Schritten:
Erhalt einer Vielzahl von elektrisch leitfähigen oder halbleitfähigen Partikeln (103);
Mischung besagter Vielzahl von elektrisch leitfähigen oder halbleitfähigen Partikeln in einem Zentrifugalmischer (202), besagter Mischschritt besteht aus dem Betrieb des besagten Zentrifugalmischers bei einer Froudezahl zwischen 220 und 1100; und
Binden besagter Vielzahl elektrisch leitfähiger und halbleitfähiger Partikel durch Hinzufügen eines Granulatbinders (203) und Mischen des besagten Granulatbinders mit besagter Vielzahl elektrisch leitfähiger und halbleitfähiger Partikel zur Bildung einer Vielzahl von Agglomeraten, charakterisiert durch Folgendes:
jeder besagte Schritt des Erhalts, Mischens und Bindens besagter elektrisch leitfähiger und halbleitfähiger Partikel zur Vorerzeugung der besagten Vielzahl von Agglomeraten vor der Zugabe besagter Vielzahl von Agglomeraten in den besagten elektrisch reaktiven Kompositwerkstoff.

2. Die Methode der Herstellung einer Vielzahl von Agglomeraten gemäß dem Anspruch 1, weiterhin bestehend aus dem Schritt: Durchführung eines Größenauswahlprozesses, um sicherzustellen, dass besagte Agglomerate innerhalb einer vorbestimmten Größenverteilung liegen.

3. Die Methode der Herstellung einer Vielzahl von Agglomeraten gemäß dem Anspruch 2, wobei besagter Größenauswahlprozess durch Sieben realisiert wird.

4. Die Methode der Herstellung einer Vielzahl von Agglomeraten gemäß einem der Ansprüche 1 bis 3, weiterhin bestehend aus dem Schritt des Curings jedes besagten Agglomerates durch einen Wärme zuführenden Prozess.

5. Eine Methode zur Herstellung eines Kompositwerkstoffes, bestehend aus folgenden Schritten:
Erhalt einer Vielzahl von Agglomeraten (102);
Zugabe besagter Vielzahl von Agglomeraten in einen flüssigen Träger, bestehend aus einer Komponente, die in der Lage ist, das Produkt zu einem festen Polymermaterial zu verfestigen; und
Mischung besagter Vielzahl von Agglomeraten in besagten flüssigen Träger zur Herstellung eines Kompositwerkstoffs; wobei jedes besagtes Agglomerat durch die Methode in Anspruch 1 vorerzeugt ist.

6. Die Methode der Herstellung eines Kompositwerkstoffs gemäß Anspruch 5, wobei besagter Zentrifugalmischer zwei Rotationsachsen aufweist.

7. Die Methode der Herstellung eines Kompositwerkstoffs gemäß dem Anspruch 6, wobei besagter Zentrifugalmischer bei einer Geschwindigkeit zwischen 1000 und 3500 U/min dreht.

8. Die Methode der Herstellung eines Kompositmaterials gemäß eines der Ansprüche 5 bis 7, wobei besagter Granulatbinder in einem Gewichtsverhältnis besagter Vielzahl elektrisch leitfähiger und halbleitfähiger Partikel zu Binder von 10:1 erfolgt.

9. Die Methode der Herstellung eines Kompositwerkstoffes gemäß eines der Ansprüche 5 bis 8, wobei besagter Granulatbinder aus flüssigem Silikonbinder besteht.

10. Die Methode der Herstellung eines Kompositmaterials gemäß dem Anspruch 5, wobei jedes besagte Agglomerat (601, 602) aus einer Oberfläche (605) besteht, die eine Vielzahl von Vertiefungen (603, 604) und eine längste Abmessung von über 40 Mikrometern aufweist.

11. Die Methode der Herstellung eines Kompositwerkstoffs gemäß dem Anspruch 5, wobei jedes besagte Agglomerat eine größte Abmessung zwischen 4 und 20 Mikrometern aufweist.

12. Die Methode der Herstellung eines Kompositwerkstoffs gemäß dem Anspruch 11, wobei jedes besagte Agglomerat eine größte Abmessung zwischen 4 und 10 Mikrometern aufweist.

13. Die Methode der Herstellung eines Kompositwerkstoffs gemäß eines der Ansprüche 5 bis 12, wobei besagte Vielzahl von elektrisch leitfähigen oder halbleitfähigen Partikeln aus sphärischen antimondotierten Zinnoxidpartikeln besteht.

14. Die Methode der Herstellung eines Kompositwerkstoffs gemäß einem der Ansprüche 5 bis 13, wobei besagte elektrisch leitfähige oder halbleitfähige Partikel eine größte Abmessung zwischen 10 und 100 Nanometern aufweist.

## Revendications

1. Procédé de production d'une pluralité d'agglomérés (102) pour l'inclusion dans un matériau composite électro-sensible (101), comprenant les étapes suivantes :
obtention d'une pluralité de particules électro-conductrices ou semi-électro-conductrices (103) ;
mélange de ladite pluralité de particules électro-conductrices ou semi-électro-conductrices dans un mélangeur centrifuge (202), ladite étape de mélange comprenant l'utilisation dudit mélangeur centrifuge avec un nombre de Froude compris entre 220 et 1 100 ; et
adhérence de ladite pluralité de particules électro-conductrices ou semi-électro-conductrices en ajoutant un liant de granulation (203) et en mélangeant ledit liant de granulation avec ladite pluralité de particules électro-conductrices ou semi-électro-conductrices pour former une pluralité d'agglomérés ; **caractérisé en ce que** :
chacune desdites étapes d'obtention, de mélange et d'adhérence desdites particules électro-conductrices ou semi-électro-conductrices préforme ladite pluralité d'agglomérés en ledit matériau composite électro-sensible.

2. Procédé de production d'une pluralité d'agglomérés selon la revendication 1, comprenant en outre l'étape d'exécution d'un processus de sélection de la taille afin d'assurer que chacun desdits agglomérés soit compris dans une plage de tailles prédéterminée.

3. Procédé de production d'une pluralité d'agglomérés selon la revendication 2, ledit processus de sélection de la taille comprenant un tamisage.

4. Procédé de production d'une pluralité d'agglomérés selon une quelconque des revendications 1 à 3, comprenant en outre l'étape de polymérisation de chacun desdits agglomérés par un processus de chauffage.

5. Procédé de production d'un matériau composite, comprenant les étapes :
d'obtention d'une pluralité d'agglomérés (102) ;
d'introduction de ladite pluralité d'agglomérés dans un véhicule liquide comprenant un composant capable de se solidifier pour produire un matériau polymère solidifié ; et
de mélange de ladite pluralité d'agglomérés dans ledit véhicule liquide pour produire un matériau composite ;
chacun desdits agglomérés étant préformé avec la méthode selon la revendication 1.

6. Procédé de production d'un matériau composite selon la revendication 5, ledit mélangeur centrifuge possédant un double axe de rotation.

7. Procédé de production d'un matériau composite selon la revendication 6, la vitesse de rotation dudit mélanger centrifuge étant comprise entre 1 000 et 3 500 tr/mn.

8. Procédé de production d'un matériau composite selon une quelconque des revendications 5 à 7, ledit liant de granulation étant ajouté selon un ratio de ladite pluralité de particules électro-conductrices ou semi-électro-conductrices sur le liant selon un ratio de 10 :1 poids/poids.

9. Procédé de production d'un matériau composite selon une quelconque des revendications 5 à 8, ledit liant de granulation comprenant un liant liquide de silicone.

10. Procédé de production d'un matériau composite selon la revendication 5, chacun desdits agglomérés (601, 602) comprenant une surface (605) présentant une pluralité d'échancrures (603, 604) et sa dimension la plus grande mesurant plus de 40 micromètres.

11. Procédé de production d'un matériau composite selon la revendication 5,
la dimension la plus grande de chacun desdits agglomérés étant comprise entre 4 et 20 micromètres.

12. Procédé de production d'un matériau composite selon la revendication 11,
la dimension la plus grande de chacun desdits agglomérés étant comprise entre 4 et 10 micromètres.

13. Procédé de production d'un matériau composite selon une quelconque des revendications 5 à 12, ladite pluralité de particules électro-conductrices ou semi-électro-conductrices comprenant des particules sphériques d'oxyde d'étain dopé à l'antimoine.

14. Procédé de production d'un matériau composite selon une quelconque des revendications 5 à 13, la dimension la plus grande de chacune de ladite pluralité de particules électro-conductrices ou semi-électro-conductrices étant comprise entre 10 et 100 nanomètres.
